# DEMANDE DE BREVET EUROPEEN

(11) **EP 1 021 013 A1**
(43) Date de publication de la demande: **19.07.2000**
(21) Numéro de dépôt: 00400068.3
(22) Date de dépôt: 13.01.2000
(51) Int. Cl.: H04L 12/24, G06F 11/20, H04J 3/14, H04B 1/74, H04L 1/22, H04Q 3/00

(54) **Procédé de gestion des ressources de protection partagées comprenant un modèle d'information**

(30) Priorité: 14.01.1999 FR 9900322
(71) Demandeur: ALCATEL, 75008 Paris (FR)
(72) Inventeur: Drion, Christophe, 91190 Gif sur Yvette (FR); Chambon, Olivier, 75004 Paris (FR); Coujoulou, Philippe, 92370 Chaville (FR)
(74) Mandataire: Lamoureux, Bernard

(57) **Abrégé**

L'invention concerne un procédé de gestion de ressources de protection permettant l'attribution de ressources de protection à des ressources actives, comprenant l'établissement d'un modèle d'information de ressources. Selon l'invention il est prévu, que ce modèle d'information comporte :
- au moins un groupe de protection d'une ressource active (RA) définissant une ressource fiable (RF1), et au moins un groupe de sélections (GS1) relié à une ressource de protection, ce groupe de sélection étant prévu pour être relié au groupe de protection ou à une ressource non fiable.

Application aux réseaux de télécommunications.

## Description

L'invention concerne un procédé de gestion des ressources de protection partagées comprenant un modèle d'information.

Dans les réseaux de communication les ressources de communication, à savoir les équipements, les multiplexeurs, les canaux de communication et les connexions sont dupliqués pour éviter les interruptions de communication dans le cas de panne.

La duplication correspond à un concept de protection. Ainsi, dans un réseau protégé, il y a des ressources que l'on qualifiera de ressources actives (c'est-à-dire des ressources prévues pour le fonctionnent normal) utilisées pour acheminer le trafic normal. Il y a également des ressources dites ressources de protection qui sont prévues pour remplacer les ressources actives en cas de panne de ces dernières.

La gestion des ressources de protection consiste à gérer l'attribution des ressources de protection à des ressources actives.

Cela signifie qu'à partir d'une station de travail, un opérateur de télécommunication peut décider d'assigner une ressource de protection à une ressource active plutôt qu'à une autre.

Il existe à ce jour plusieurs mécanismes de protection.

Selon un premier mécanisme, il est possible de protéger des ressources actives en prévoyant une ressource de protection dédiée à chaque ressource active (c'est le mécanisme de protection dénommé 1+1).

Selon un autre mécanisme il est possible de protéger les ressources actives avec plusieurs ressources de protection pour chacune (c'est le mécanisme de protection dénommé M pour 1).

Il est également possible de protéger plusieurs ressources actives avec une ressource de protection commune (c'est le mécanisme dénommé 1 pour N).

Enfin, il est également possible de protéger plusieurs ressources actives avec plusieurs ressources de protection (c'est le mécanisme dénommé M pour N).

Pour pouvoir être exploitable par un système de gestion des éléments de réseau de télécommunication, un mécanisme de protection de ressources doit être modélisé par un modèle d'information.

La modélisation est le procédé qui définit l'information qui peut refléter la configuration de la protection. L'information demandée doit permettre à l'utilisateur (au système de gestion) de connaître quelles sont les ressources de protection, quelles sont les ressources actives, et quelle est l'attribution des ressources de protection auxdites ressources actives. De plus, le modèle d'information proposé doit permettre de changer la configuration de la protection en faisant simplement un changement des données. Une fois qu'un modèle d'information a été proposé, il est possible d'implémenter le mécanisme de protection et de fournir des capacités de gestion à l'opérateur.

Quelques modèles de protection cités ci-dessus ont été modélisés et ont déjà été implémentés.

C'est le modèle de protection 1+1 dans lequel une ressource active peut être protégée par une ressource de protection ou du modèle de protection M pour 1 dans lequel une ressource active est protégée par plusieurs ressources de protection.

Les modèles de protection 1 pour 1 et M pour 1 ont été modélisés et standardisés par les recommandations de l'ITU-G774-3 et G774-4.

Il n'y a pas de solution standardisée ou de développement en référence à la modélisation de protection pour des modèles 1 pour N et M pour N.

Les modèles d'information des mécanismes de protection existant à ce jour sont donc le modèle 1 pour 1 et M pour 1.

Ces limitations ont des impacts sur différents points au niveau des capacités de gestion:
- Il n'est pas possible de représenter les ressources de protection partagées;
- Il n'est pas possible d'attribuer des priorités de protection à plusieurs ressources actives a antagonistes;
- Il n'est pas possible de notifier au gestionnaire de réseau, l'attribution de la ressource de protection à une ressource fiable plus prioritaire.
- D'une manière générale, on ne dispose pas d'une bonne vue sur le système de protection, et une gestion flexible n'est donc pas possible.

Mais, bien que cela ait été demandé par l'industrie, le partage des ressources de protection par plusieurs ressources actives n'a jamais été modélisé.

Ainsi, les mécanismes 1 pour N et M pour N ne sont pas encore exploitables par les systèmes de gestion d'élément de réseau.

Le procédé de gestion proposé ici comporte un modèle de représentation du partage des ressources qui permet de représenter des mécanismes de protection de ce type.

Un autre problème a consisté à proposer un modèle d'information pour la modélisation des mécanismes de protection qui utilisent le partage de ressources de protection dons les réseaux de transmission qui soit indépendant de la couche, de la technologie, et de la topologie.

Le but de l'invention est de résoudre ces problèmes en proposant un modèle d'information de ressources de protection applicable aux mécanismes 1 pour N et M pour N, ledit modèle étant obtenu par extension des modèles d'information de protection existants pour le mécanisme 1 pour 1 au moyen d'information de gestion supplémentaire.

L'invention a pour objet un procédé de gestion de ressources de protection permettant l'attribution de ressources de protection à des ressources actives, comprenant l'établissement d'un modèle d'information de ressources, principalement caractérisé en ce que ce modèle d'information comporte :
- au moins un groupe de protection d'une ressource active RA définissant une ressource fiable, et
- au moins un groupe de sélection relié à une ressource de protection, ce groupe de sélection étant prévu pour être relié au groupe de protection ou à une ressource non fiable.

Selon une autre caractéristique, le modèle d'information comporte :
- au moins deux groupes de protection d'au moins deux ressources actives définissant respectivement au moins deux ressources et
- au moins un groupe de sélection reliée à une ressource de protection, ce groupe de sélection étant prévu pour être relié à l'un ou à l'autre des groupes de protection.

Selon une autre caractéristique, le ou les groupes de protection comportent au moins deux points de connexion et le groupe de sélection comporte au moins deux points de connexion.

Selon une autre caractéristique, le modèle d'information comporte :
- au moins deux groupes de protection d' au moins deux ressources actives définissant respectivement deux ressources et
- au moins deux groupes de sélection chacun étant relié à une ressource de protection, chaque groupe de sélection étant prévu pour être relier à l'un ou à l'autre des groupes de protection.

Selon une autre caractéristique, le modèle d'information comporte :
- au moins deux groupes de protection d' au moins deux ressources actives définissant ou moins deux ressources fiables et,
- deux groupes de sélection chacun étant relié à une ressource de protection, un groupe de sélection étant relié à un des groupes de protection, et l'outre groupe de sélection étant relié à un autre groupe de protection, les deux groupes de sélection étant reliés entre-eux.

D'outres particularités et avantages apparaîtront à la lecture de la description qui est faite ci-après et qui est donnée à titre d'exemple illustratif et non limitatif en regard des dessins annexés sur lesquels :
- la figure 1, représente le schéma logique d'un modèle d'information d'un mécanisme de protection selon l'art antérieur,
- la figure 2, représente le schéma logique d'un objet entrant dans le modèle d'information selon l'invention,
- les figures 3 à 6, représentent les schémas logiques d'objets entrants dans le modèle d'information définissant respectivement 4 mécanismes de protection selon l'invention.

On rappelle que les mécanismes de protection 1 pour 1 et M pour 1 sont basés sur l'utilisation d'un sélecteur appartenant à un groupe de protection, qui permet de commuter d'une ressource active vers une ressource de protection lorsqu'un défaut est détecté sur la ressource active.

A chaque instant, une ressource de protection est attribuée à une ressource active, un tel sélecteur est inséré dons la base de données des informations de gestion.

Mais il n'est pas possible que plusieurs sélecteurs partagent une ressource de protection commune.

Dans le cas d'un mécanisme de protection 1 pour N, la ressource de protection habituellement liée au sélecteur est remplacée par un sélecteur de deuxième niveau.

Ce sélecteur de deuxième niveau est relié à une ressource de protection, et peut commuter entre plusieurs sélecteurs de premier niveau ou d'outres ressources.

Les modèles d'informations existants pour la protection sont basés sur l'introduction de sélecteur. Dans la recommandation G774-3, les sélecteurs sont appelés groupe de protection.

Dans la recommandation G774-4, les sélecteurs sont appelés groupe de protection de connexion.

Toutefois, on a le même principe qui est appliqué pour tous ces modèles d'informations.

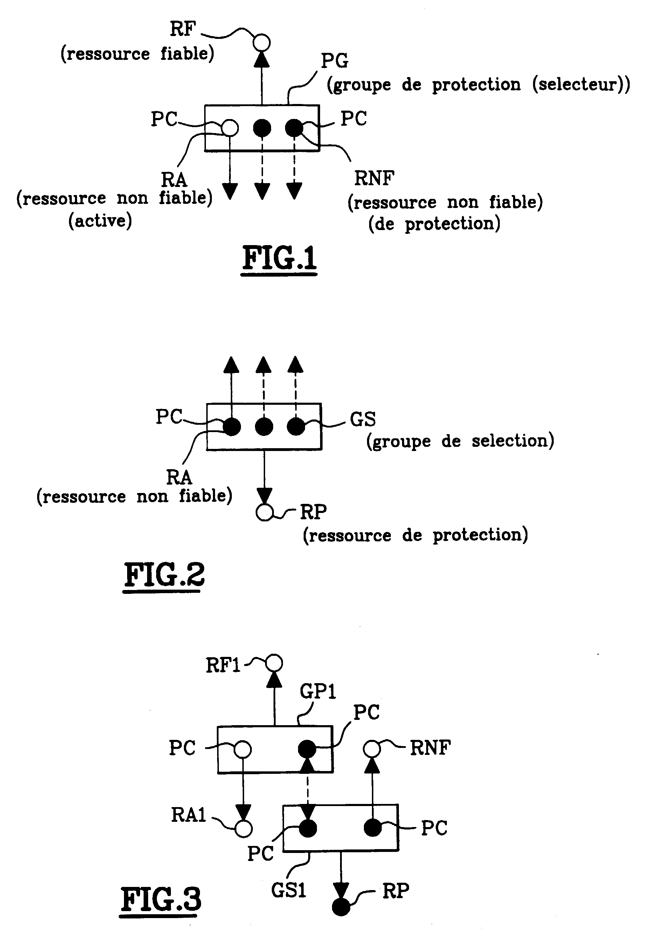

L'idée de base de l'état de la technique est d'avoir un sélecteur, comme on peut le voir sur la figure 1, qui supporte une ressource active représentée par un point blanc de la figure 1 et une ou plusieurs ressources de protection représentées par des points noirs, sur la figure 1, qui sont attribuées à ladite ressource active. Les différents points sont des points de connexion référencés PC.

Dans toute la suite de la description, les points blancs et noirs sont des points de connexion PC.

Côté émission, lorsque la ressource active tombe en panne, le sélecteur commute automatiquement sur la ressource de protection prioritaire qu'il contient pour envoyer le trafic.

Côté réception, lorsqu'une ressource de service tombe en panne, le sélecteur commute automatiquement sur la ressource de protection prioritaire qu'il contient pour recevoir le trafic entrant. Ainsi, le trafic est toujours acheminé à travers le réseau, mais par un autre chemin.

Comme cela a déjà été expliqué, il n'est pas possible de représenter le fait qu'une ressource de protection est attribuée à plusieurs autres ressources, par exemple le fait que la ressource de protection fasse partie de plusieurs groupes de protection.

C'est pourquoi il est prévu d'introduire un sélecteur de deuxième niveau appelé groupe de sélection, tel que cela est montré sur la figure 2.

Ce sélecteur a une ressource de protection qui lui est attribuée en permanence et permet de sélectionner une ressource à partir d'un ensemble de ressources non fiables (non protégées).

De cette façon il est possible de sélectionner la ressource qui est protégée par une ressource de protection.

En outre, le groupe de sélection peut attribuer des priorités aux ressources qu'il supporte.

Ainsi, lorsqu'une ressource non fiable utilise une ressource de protection, si une ressource de haut niveau de priorité tombe en panne, alors la ressource de protection est prise d'office par le groupe de sélection et attribuée à ladite ressource prioritaire.

Le groupe de sélection peut notifier le gestionnaire de réseau de cette réattribution de la ressource de protection.

De plus, le modèle d'information proposé ici peut facilement être interfacé avec les solutions existantes, telles que présentées par les recommandations de l'ITU-T G774-3 et G774-4 afin d'obtenir de nouvelles capacités de gestion.

La présente invention permet d'apporter une représentation des mécanismes (ou schémas) de protection au système de gestion du réseau. Cette représentation ou modèle d'information sert à décrire le partage des ressources de protection et leur utilisation pour permettre éventuellement au gestionnaire du réseau d'effectuer des configurations souhaitées autrement dit de définir que telle ou telle ressource de protection sera attribuée à tel ou tel chemin normal.

Le modèle d'information permet d'observer le système c'est à dire de savoir quels sont les chemins qui sont secourus, quand une faute s'est produite et que les protections ont été appliquées.

La représentation pour le système de gestion d'un cas élémentaire pour lequel on a une ressource active (fonctionnement normal) et une ressource de protection est de dire que l'on a une ressource protégée RP liée à deux ressources, la ressource active (normale) RA et la ressource de protection RP. La ressource protégée RF a un degré de fiabilité supérieur à celui de la ressource normale.

Le système de gestion voit ainsi la ressource active RA fonctionner normalement et la ressource RP assurer la protection. Le système voit aussi que si la ressource RA entre en faute, la ressource de protection RP fonctionne, le mécanisme de protection étant mis en fonction et informant le système de gestion.

Un tel système existe déjà. En revanche, il n'existe pas de modèle de mécanisme (ou schéma) de protection dans le cas où la ressource de protection est partagée.

Selon l'invention, on définit une façon de représenter l'information pour la collaboration entre le système de gestion et l'élément de réseau (la partie logiciel). L'élément de réseau présente l'information sous un format prédéfini. L'élément de réseau comporte un agent (composant du logiciel) qui est chargé d'offrir une vue au système de gestion sur la façon dont on représente les fonctionnalités de l'élément de réseau à travers un modèle d'information qui est généralement standardisé ce qui correspond en pratique, à la base de donnée de l'élément de réseau. Cet agent comporte donc le modèle d'information offrant celle vue suivant un standard qui est le standard M.3100 document ITU -, ou X721 ou G774 ou Q821 ou Q822-.

Comme cela a été dit, ces standards malheureusement ne définissent pas la manière de représenter les schémas de protection.

On définit donc pour cela des objets d'informations. Un objet d'information est un groupe cohérent d'information sur lequel on peut effectuer des opérations c'est à dire créer une connexion dans un élément de réseau, ou qui sert à envoyer des informations par exemple émettre une alarme.

Un modèle d'information définit les types d'objets et on présente au centre de gestion du réseau des exemplaires de ces types d'objets. Chaque groupe logique est défini en tant qu'objet.

On illustre le propos avec l'exemple qui suit puis avec les différents modes de réalisation illustrés par les figures 3 à 6.

Chaque noeud est relié à des fibres. Par exemple, un noeud peut être relié à quatre fibres par quatre points de connexion. Une fibre entrante, une fibre sortante normale, une fibre entrante et une fibre sortante de secours (de protection).

La ressource entrante est protégée par l'autre ressource entrante. En rajoutant un objet (de sélection) on réalise un partage des ressources de protection. Pour l'accès, on passe par un commutateur qui donnera ou non la ressource en fonction de son utilisation.

On introduit ainsi un nouvel objet que l'on peut intégrer dans les mécanismes existants. Il faut alors établir simplement des pointeurs entre les groupes de protection qui contiennent les points de connexion.

On va décrire dans la suite les différentes manières d'utiliser le groupe de sélection.
- On a déjà défini dans la description qui vient d'être faite, les mécanismes de protection 1+1 et M pour N.

Le mécanisme de protection 1 pour 1 est un cas particulier du mécanisme de protection M pour N.

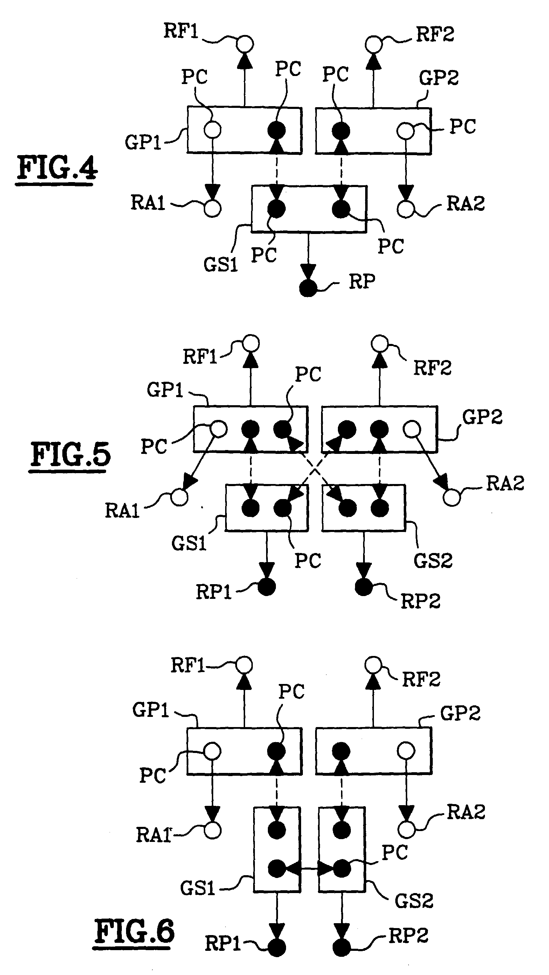

Comme dans le mécanisme 1+1, dans le mécanisme de protection 1 pour 1, chaque ressource de protection est attribuée à une ressource active à l'exception près que lorsque la ressource de protection n'est pas utilisée pour remplacer la ressource active, ladite ressource de protection peut être utilisée pour acheminer un surplus de trafic (non prioritaire).
1) En combinant un groupe de sélection avec un groupe de protection et une ressource non fiable, il est possible de représenter le mécanisme de protection 1 pour 1 tel que représenté sur la figure 3.
   Tout comme pour le mécanisme 1 + 1, chaque ressource de protection est assignée à une ressource active dans le cas du mécanisme 1 pour 1, excepté lorsqu'une ressource de protection n'est pas utilisée pour protéger la ressource active à laquelle elle est attribuée, elle peut être utilisée pour transporter un trafic supplémentaire non prioritaire.
   En combinant un groupe de sélection avec un groupe de protection (connexion) GP et une ressource non fiable, il est possible de représenter le mécanisme de protection 1 pour 1 comme on peut le voir à partir du schéma de la figure 3.
   Dans le cas de fonctionnement normal, (par défaut) le groupe de protection GP1 est commuté vers la ressource active RA1 telle que l'indique la flèche en trait plein. Le groupe de sélection GS1 est commuté sur la ressource non fiable RNF qui transporte le trafic supplémentaire.
   Dans le cos d'une panne, le groupe de protection commute sur sa ressource de protection, alors le groupe de protection est sélectionné par le groupe de sélection, et le trafic supplémentaire ne peut plus être transporté par cette ressource de protection.
2) La combinaison de plusieurs groupes de protection (de connexion) pour une protection 1 pour n:
   En combinant un groupe de sélection GS1 avec plusieurs groupes de protection (connexion) GP1, GP2 il est possible de représenter le mécanisme de protection 1 pour n comme cela est illustré par le schéma de la figure 4.
   Dans ce cas, en situation normale, les deux ressources fiables RF1, RF2 sont connectées à leur ressource active respective RA1, RA2 : les groupes de protection GP1, GP2 sont connectés sur les ressources actives RA1, RA2 comme l'indiquent les flèches en trait plein. Le groupe de sélection GS1 peut avoir une valeur correspondant à un défaut dépendant des priorités des ressources actives.
   Dans le cas d'une panne, l'un des groupes de protection est commuté sur ces ressources de protection, alors le groupe de protection est sélectionné par le groupe de sélection. Si l'autre groupe de protection a besoin à ce moment là de commuter sur la ressource de protection, le groupe de protection le plus prioritaire est alors sélectionné.
   On remarque qu'il est possible de réaliser tout mécanisme de protection 1 pour n simplement en rajoutant des groupes de protection au-dessus du groupe de sélection.
   Il est également possible de transporter du trafic supplémentaire avec une ressource de protection simplement en rajoutant une ressource non fiable au-dessus du groupe de sélection comme cela vient d'être expliqué.
3) La combinaison avec des groupes de protection (connexion) pour des mécanismes de protection m pour n:
   En combinant plusieurs groupes de sélection GS1, GS2 avec plusieurs groupes de protection GP1, GP2, il est possible de représenter le mécanisme de protection m pour n tel que cela est illustré par le schéma de la figure 5.
   Ainsi, la configuration en cas de configuration de défaut, les deux ressources fiables RF1, RF2 sont connectées à leur ressource active respective RA1, RA2: les groupes de protection GP1, GP2 sont commutés sur les ressources actives telles que l'illustrent les flèches en trait plein. Chaque groupe de sélection GS1, GS2 peut être commuté vers un groupe de protection.
   En cas de panne d'une ressource active, son groupe de protection peut choisir le groupe de sélection qui convient (par exemple, la ressource de protection) et commuter sur ce groupe.
   On peut remarquer qu'il est possible de réaliser tout mécanisme de protection m pour n simplement en rajoutant des groupes de protection et des groupes de sélection et en réalisant une liaison entre ces différents groupes. Il est possible également de transporter du trafic supplémentaire avec les ressources de protection en ajoutant simplement une ressource non fiable au-dessus de chaque groupe de sélection.

La combinaison avec d'autres groupes de sélection pour représenter un étai de passage à travers l'élément de réseau.

Comme cela a déjà été expliqué, une ressource de protection peut être utilisée pour transporter du trafic prioritaire lorsque une ressource active est tombée en panne. Elle peut également être utilisée pour transporter du trafic non prioritaire.

Mais il y a également une troisième possibilité dans l'usage des ressources de protection : dans certains cas particuliers, le trafic peut traverser un équipement réseau uniquement à travers les ressources de protection. Dans un tel cas, les trafics entrants et reçus par la ressource de protection sont ré-émis vers une autre ressource de protection.

La connexion entre la ressource de protection qui émet et la ressource de protection qui reçoit peut être représentée en combinant plusieurs groupe de sélection les uns aux autres tel que cela à est représenté sur le schéma de la figure 6.

Ainsi, dans une configuration de défaut, les deux ressources de protection fiables RF1, RF2 sont connectées â leur ressource active respective RA1, RA2: les groupes de protection GP1, GP2 sont commutés sur les ressources actives RA1, RA2 tel que l'indique les flèches en trait plein. Chaque groupe de sélection GS1, GS2 peut être commuté sur les groupes de protection qui lui sont affectés ou les uns aux autres lorsque l'on désire établir un état que l'on nommera état de passage ou traversée.

On peut remarquer également dans ce cas qu'il est possible d'avoir plusieurs états de traversée simplement en rajoutant des ressources dans les groupes de sélection. Ceci peut être avantageux pour représenter tous les chemins possibles lorsque l'élément de réseau est un noeud intermédiaire dons les ressources de protection.

Tous les modes de réalisation qui viennent d'être décrits ci-dessus peuvent être combinés pour avoir une représentation complète des configurations de protection dans un équipement de réseau. Le modèle d'information pour partager des ressources de protection qui vient d'être décrit ci-dessus peut être formalisé par un langage spécifique de télécommunication. Le langage pouvant être utilisé et par exemple le langage GDMO (Guidelines for the Definition of Managed Object) qui est le langage le plus couramment utilisé à ce jour pour la formalisation des données dans le domaine des télécommunications.

## Revendications

1. Procédé de gestion de ressources de protection permettant l'attribution de ressources de protection à des ressources actives, comprenant l'établissement d'un modèle d'information de ressources,
caractérisé en ce que ce modèle d'information comporte :
- au moins un groupe de protection d'une ressource active (RA), définissant une ressource fiable (RF1), et
- au moins un groupe de sélections (GS1) relié à une ressource de protection, ce groupe de sélection étant prévu pour être relié audit groupe de protection ou à une ressource non fiable.

2. Procédé de gestion de ressources de protection selon la revendication 1, caractérisé en ce que le modèle d'information comporte :
- au moins deux groupes de protection (GP1, GP2) d'au moins deux ressources actives (RF1, RA2) définissant respectivement au moins deux ressources fiables (RF1, RF2) et
- au moins un groupe de sélection (GS1) reliée à une ressource de protection, ce groupe de sélection étant prévu pour être relié à l'un ou à l'autre des groupes de protection (GP1, GP2).

3. Procédé de gestion de ressources de protection selon la revendication 1 ou 2, caractérisé en ce que le ou les groupes de protection comportant au moins deux points de connexion (P1, P2) et en ce que le groupe de sélection (GS1) comporte au moins deux points de connexion (S1, S2).

4. Procédé de gestion de ressources de protection selon le revendication 1 caractérisé en ce que le modèle d'information comporte :
- au moins deux groupes de protection (GP1, GP2) d'au moins deux ressources actives (RA1, RA2) définissant respectivement au moins deux ressources fiables (RF1, RF2) et
- au moins deux groupes de sélection (GS1, GS2) chacun étant relié à une ressource de protection (RP1, RP2), chaque groupe de sélection étant prévu pour être relié à l'un ou à l'autre des groupes de protection (GP1, GP2).

5. Procédé de gestion de ressources de protection selon l'une quelconque des revendications 1 à 3, caractérisé en ce que le modèle d'information comporte :
- au moins deux groupes de protection (GP1, GP2) d'au moins deux ressources actives (RA1, RA2) définissent au moins deux ressources fiables (RF1, RF2) et,
- deux groupes de sélection (RS1, RS2) chacun étant relié à une ressource de protection (RP1, RP2), un groupe de sélection étant relié à un des groupes de protection, et l'autre groupe de sélection étant relié à un autre groupe de protection, les deux groupes de sélection étant reliés entreeux.
